# EUROPÄISCHE PATENTSCHRIFT

(11) **EP 2 555 065 B1**
(45) Veröffentlichungstag und Bekanntmachung des Hinweises auf die Patenterteilung: **26.09.2018**
(21) Anmeldenummer: 11176082.3
(22) Anmeldetag: 01.08.2011
(51) Int. Cl.: G05B 9/02, G06F 3/041, G06F 3/048, G05B 19/409

(54) **Verfahren zum Betrieb eines Bedien- und Beobachtungsgerätes für sicherheitskritische Anwendungen**
Method for operating an operating and observation device for security-critical applications
Procédé de fonctionnement d'un appareil de commande et d'observation pour applications critiques à la sécurité

(43) Veröffentlichungstag der Anmeldung: 06.02.2013
(73) Patentinhaber: Siemens Aktiengesellschaft, 80333 München (DE)
(72) Erfinder: Jöhnßen, Oliver, 91058 Erlangen (DE); Zintel, Andreas, 90478 Nürnberg (DE)

(56) Entgegenhaltungen:
- EP-A1- 2 234 005
- WO-A2-2010/009488
- DE-A1- 10 161 924
- DE-A1- 19 901 481
- US-A1- 2003 018 411

## Beschreibung

Die Erfindung betrifft ein Verfahren zum Betrieb eines Bedien- und Beobachtungsgerätes für sicherheitskritische Anwendungen, wobei das Bedien- und Beobachtungsgerät ein Display und einen berührungssensitiven Sensor umfasst, wobei in Vorbereitung auf eine freizugebende sicherheitskritische Anwendung auf dem Display ein Bedienelement dargestellt wird, welches ein Bediener, um eine Freigabe zu erhalten, berühren muss, wobei die Freigabe solange erteilt wird, wie das Bedienelement berührt wird.
Bei der Bedienung von Maschinen und industriellen Anlagen über Bedien- und Beobachtungsgeräte kann es vorkommen, dass Bedienschritte für sicherheitskritische Anwendungen in der Automatisierungstechnik, beispielsweise das Herunterfahren für einen Presskolben einer Presse oder das Herausschnellen eines Stanzkolbens einer Stanzmaschine, zu Verletzungen bzw. zu einer Gefahr für Leib und Leben des Bediener der Maschine führen können. Derartige Verletzungen können daraus resultieren, dass sich Gliedmaßen von der zu bedienenden Person, während des Bedienvorgangs innerhalb eines Gefahrenbereiches der Maschine befinden können. Derartige Verletzungen können auch zustande kommen, wenn z.B. ein Bediener einer Maschine die Bedienung mit einer Hand ausführen kann und gleichzeitig mit der zweiten Hand in den Gefahrenbereich der Maschine gelangen kann. Daraus folgte schon seit längerem die Forderung das derartige Bedieneinrichtungen ohne spezielle Sicherheitsschaltungen nicht zum Bedienen von sicherheitskritischen Anwendungen verwendet werden dürfen.
Bisher wurde die Sicherheit des Bedieners durch den Einsatz von z.B. einer Zweihandschaltung gewährleistet. Gestaltungsleitsätze für die Umsetzung einer derartigen Zweihandschaltung sind in der DIN EN574 definiert. Dabei befinden sich vorzugsweise zwei Stellteile außerhalb des Arbeitsbereiches der Maschine. Diese müssen vom Bediener synchron betätigt werden um eine Aktion der Maschine auszulösen. Dadurch wird gewährleistet, dass sich beispielsweise beide Hände des Bedieners außerhalb des Gefahrenbereiches der Maschine befinden.

Auch offenbart die Offenlegungsschrift EP 2 234 005 A1 eine Bedienvorrichtung zur Bedienung und Beobachtung einer technischen Anlage mit einem berührungssensitiven Display, wobei zur Erhöhung der Sicherheit einer Bedienhandlung ein zusätzlicher berührungssensitiver Bereich außerhalb des Displays angeordnet ist.

DE 101 61 924 A1 offenbart ein Verfahren zum Betrieb eines Bedien- und Beobachtungsgerätes für sicherheitskritische Anwendungen, wobei das Bedien- und Beobachtungsgerät ein Display und einen davor angeordneten berührungssensitiven Sensor umfasst, wobei in Vorbereitung auf eine freizugebende sicherheitskritische Anwendung auf dem Display ein Bedienelement dargestellt wird, welches ein Bediener, um eine Freigabe zu erhalten, berühren muss, wobei die Freigabe solange erteilt wird, wie das Bedienelement berührt wird.

Der Erfindung liegt die Aufgabe zugrunde, ein Verfahren zum Betrieb eines Bedien- und Beobachtungsgerätes für sicherheitskritische Anwendungen anzugeben, bei welchem die Sicherheit weiterhin erhöht wird und auf zusätzliche hardwaremäßige Stellteile außerhalb des Arbeitsbereiches der Maschine verzichtet werden kann.

Die Erfindung wird durch ein Verfahren zum Betrieb eines Bedien- und Beobachtungsgerätes für sicherheitskritische Anwendungen, wobei das Bedien- und Beobachtungsgerät ein Display und einen davor angeordneten berührungssensitiven Sensor umfasst, dadurch gelöst, dass in Vorbereitung auf eine freizugebende sicherheitskritische Anwendung auf dem Display ein Bedienelement dargestellt wird, welches ein Bediener, um eine Freigabe zu erhalten berühren muss, wobei die Freigabe solange erteilt wird, wie das Bedienelement berührt wird, dabei wird der davor angeordnete berührungsempfindliche Sensor ausgelegt Mehrfachberührungen zu erkennen, wobei das Bedienelement in einen ersten Bedienbereich und in einen zweiten Bedienbereich unterteilt wird, wobei innerhalb des ersten Bedienbereiches eine erste Anzahl von Berührpunkten und innerhalb des zweiten Bedienbereiches eine zweite Anzahl von Berührpunkten dargestellt werden, dabei werden die Positionsdaten des ersten Bedienbereiches und des zweiten Bedienbereiches derart gewählt, dass es nicht möglich ist mit den Fingern einer einzelnen menschlichen Hand gleichzeitig alle Berührpunkte aus dem ersten Bedienbereich und alle Berührpunkte aus dem zweiten Bedienbereich zu berühren, wobei die Freigabe für die sicherheitskritische Anwendung nur erteilt wird, wenn sämtliche Berührpunkte aus dem ersten Bedienbereich und sämtliche Berührpunkte aus dem zweiten Bedienbereich berührt werden und für jede erneute Freigabe eine andere Darstellung auf dem Display für den ersten Bedienbereich und den zweiten Bedienbereich gewählt wird. Durch den Einsatz eines berührungsempfindlichen Sensors bei Bedien- und Beobachtungsgeräten, beispielsweise eines Multitouch-Sensors, welcher dazu ausgelegt ist, mehrere Berührungspunkte gleichzeitig zu erkennen, kann gewährleistet werden, dass der Bediener beispielsweise alle zehn Finger seiner beiden Hände auf den grafisch vorgegebenen Positionen positioniert hat und sich somit seine Hände außerhalb des Gefahrenbereiches der Maschine befinden. Um die Freigabe für eine sicherheitskritische Anwendung oder Aktion zu erlangen, müssen beispielsweise alle zehn Finger an den vorgegebenen Positionen liegen.
Um die Freigabe einer sicherheitsgerichteten Anwendung mit einem Bedien- und Beobachtungsgerät weiter zu erhöhen, wird für die Ermittlung der ersten Anzahl und der zweiten Anzahl ein Zufallsgenerator verwendet und dadurch ist für eine erneute Darstellung von Berührpunkten die Anzahl der Punkte nicht vorhersagbar.

Für die Ermittlung der Positionsdaten des ersten Bedienbereiches und des zweiten Bedienbereiches wird ebenfalls ein Zufallsgenerator verwendet und dadurch sind für eine erneute Darstellung der Bedienbereiche ihre Positionen nicht vorhersagbar. Durch die Anwendung dieses Verfahrensschrittes wird die Sicherheit zur Maschinenbedienung um ein weiteres Maß erhöht.

Ein weiterer Optimierungsschritt im Hinblick auf die Erhöhung der Sicherheit wird dadurch erreicht, dass für die Ermittlung eines ersten Satzes von Koordinaten der Berührpunkte innerhalb des ersten Bedienbereiches und für die Ermittlung eines zweiten Satzes von Koordinaten der Berührpunkte innerhalb des zweiten Bedienbereiches ein Zufallsgenerator verwendet wird. Mit jedem erneuten Versuch eine Freigabe für einen sicherheitskritischen Bedienschritt der Maschine zu erlangen, werden die Berührpunkte auf dem Display des Bedien- und Beobachtungsgerätes somit an anderen Positionen dargestellt. Dieses Vorgehen beugt einer Umgehung der Sicherheitsschaltung durch z.B. den Einsatz einer Vorrichtung vor, denn verändert sich die Position eines oder mehrerer der einzelnen Berührpunkte auf dem Display nach jeder ausgeführten Aktion, so kann eine einmal angefertigte Vorrichtung, welche beispielsweise den Touchsensor berührt, nicht benutzt werden. Statt für die Freigabe alle zehn Finger zu benutzen, kann auch die Anzahl der Berührpunkte variieren, z.B. bei einem ersten Freigabeschritt werden nur sieben Berührungspunkte gefordert und bei einem darauf folgenden Freigabeschritt können auf einmal neun Berührungspunkte gefordert werden.

In einer weiteren Ausgestaltung des Verfahrens wird die Sicherheit nochmals erhöht, wenn weiterhin geprüft wird, ob zusätzlich ein weiterer Punkt auf dem Sensor berührt wird und wenn dies der Fall ist, wird die Freigabe unterdrückt. D.h. wird zusätzlich ein anderer, außer den vorgegebenen Berührpunkten berührt, z.B. durch eine vorsätzliche Manipulation, so wird die die eigentliche Gefahr verursachende Aktion nicht ausgeführt.

Die Zeichnung zeigt ein Ausführungsbeispiel des erfindungsgemäßen Verfahrens an einem Bedien- und Beobachtungsgerät, es zeigen:
- FIG 1: eine Erlangung einer Freigabe durch Benutzung einer linken menschlichen Hand und einer rechten menschlichen Hand jeweils mit allen fünf Fingern, und
- FIG 2: der Versuch einer erneuten Freigabe nach dem Freigabeschritt aus FIG 1, wobei auch die linke menschliche Hand und die rechte menschliche Hand benutzt wird, aber nun die Anzahl der Berührpunkte reduziert wurde.

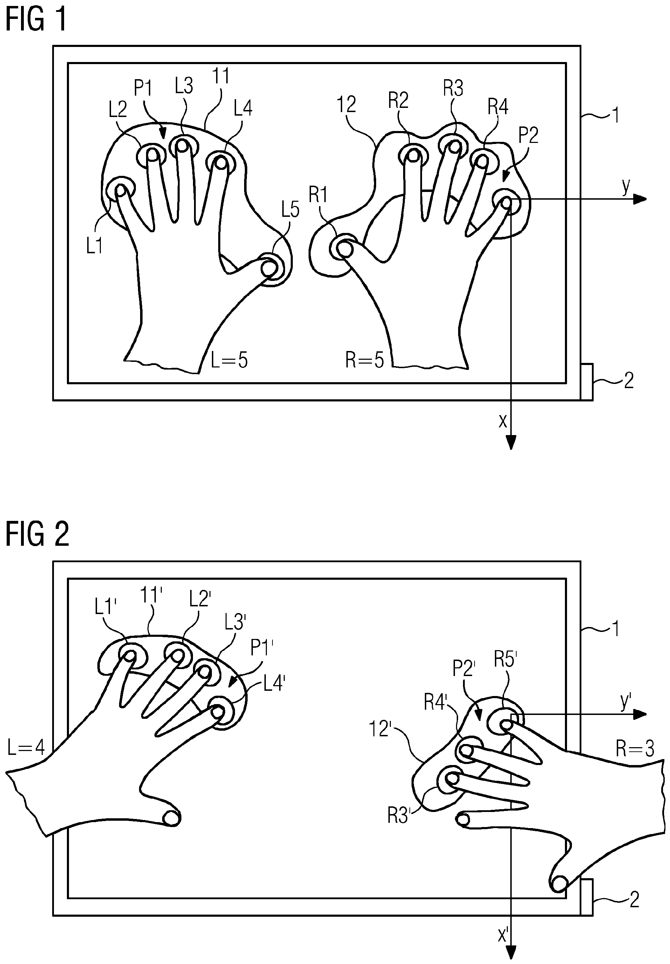

Gemäß FIG 1 ist ein Bedien- und Beobachtungsgerät 1 mit einem Display, beispielsweise einem LCD-Display, und einem davor angeordneten berührungssensitiven Sensor, beispielsweise ein resistiver Multitouch-Sensor, dargestellt.

Ein Grafikprogramm zur Ansteuerung des Displays und zur Auswertung von Berührungen des berührungssensitiven Sensors ist dabei derart ausgestaltet, dass ein Bedienelement für die Freigabe einer sicherheitskritischen Anwendung in einen ersten Bedienbereich 11 und in einen zweiten Bedienbereich 12 unterteilt wird, wobei innerhalb des ersten Bedienbereiches 11 eine erste Anzahl L von fünf Berührpunkten L1,...,L5 und innerhalb des zweiten Bedienbereiches 12 eine zweite Anzahl R von ebenfalls fünf Berührpunkten R1,...,R5 dargestellt werden. Dabei werden die Positionsdaten P1 des ersten Bedienbereiches 11 und die Positionsdaten P2 des zweiten Bedienbereiches 12 derart gewählt, dass es nicht möglich ist, beispielsweise mit den Fingern der linken menschlichen Hand gleichzeitig alle Berührpunkte L1,...,L5 aus dem ersten Bedienbereich und alle Berührpunkte R1,...,R5 aus dem zweiten Bedienbereich 12 zu berühren, die Freigabe für die sicherheitskritische Anwendung wird nur erteilt, wenn sämtliche Berührpunkte L1,...,L5 aus dem ersten Bedienbereich 11 und sämtliche Berührpunkte R1,...,R5 aus dem zweiten Bedienbereich 12 berührt werden.

Für die Ermittlung der ersten Anzahl L und der zweiten Anzahl R an Berührpunkten wird ein Zufallsgenerator 2 verwendet. Durch die Verwendung des Zufallsgenerators 2 in dem Verfahrensschritt der Generierung der Anzahl der Berührpunkte ist für eine erneute Darstellung von Berührpunkten die Anzahl der Punkte nicht vorhersagbar, welches die Sicherheit bei der Bedienung erhöht.

Auch für die Ermittlung der Positionsdaten P1 des ersten Bedienbereiches 11 und der Positionsdaten P2 des zweiten Bedienbereiches 12 wird der Zufallsgenerator 2 verwendet und dadurch wird für eine erneute Darstellung der Bedienbereiche 11, 12 die Positionen an der grafischen Oberfläche nicht vorhersagbar sein.

Gemäß FIG 2 ist das Bedien- und Beobachtungsgerät 1 mit einer gegenüber der in FIG 1 gezeigten Anordnung des ersten Bedienbereiches 11 und des zweiten Bedienbereiches 12 veränderten Darstellung gezeigt. Der mit FIG 2 gezeigte Bedienschritt zur Freigabe einer sicherheitskritischen Anwendung liegt zeitlich hinter dem in FIG 1 gezeigten Bedienschritt.

Um einen Missbrauch auszuschließen, wird für jede erneute Freigabe eine andere Darstellung auf dem Display für den ersten Bedienbereich 11 und den zweiten Bedienbereich 12 gewählt.

Die veränderten Positionsdaten P1 und P2 sowie die veränderten Berührpunkte L1,...,L5 und R1,...,R5 sowie die veränderten Koordinaten X,Y sind für den erneuten Bedienschritt in der FIG 2 jeweils mit einem Strich gekennzeichnet. Es entstehen Positionsdaten P1' und P2', ein neuer erster Bedienbereich 11' und ein neuer zweiter Bedienbereich 12', neue Berührpunkte L1',...,L4' und weitere neue Berührpunkte R3',...,R5'.

Es wird als ein großer Vorteil bei dem Einsatz des aufgezeigten Verfahrens in Bedien- und Beobachtungsgeräten angesehen, dass es möglich ist Standard Bedien- und Beobachtungsgeräte ohne zusätzliche separate Sicherheitsschaltungen oder Sicherheitsschalter für sicherheitskritische Aktionen einzusetzen. Das Verfahren kann in heutige existierende Bedien- und Beobachtungsgeräte implementiert werden, dabei ist einzig und allein darauf zu achten, dass der berührungsempfindliche Sensor als ein Sensor für ein Multitouch-Panel bereits vorhanden ist.

## Patentansprüche

1. Verfahren zum Betrieb eines Bedien- und Beobachtungsgerätes (1) für sicherheitskritische Anwendungen, wobei das Bedien- und Beobachtungsgerät (1) ein Display und einen davor angeordneten, berührungssensitiven Sensor umfasst, wobei in Vorbereitung auf eine freizugebende sicherheitskritische Anwendung auf dem Display ein Bedienelement dargestellt wird, welches ein Bediener um eine Freigabe zu erhalten berühren muss, wobei die Freigabe solange erteilt wird, wie das Bedienelement berührt wird,
**dadurch gekennzeichnet, dass** der davor angeordnete, berührungssensitive Sensor dafür ausgelegt ist mehrfach Berührungen zu erkennen, wobei das Bedienelement in
- einen ersten Bedienbereich (11) und in
- einen zweiten Bedienbereich (12) unterteilt wird,
wobei innerhalb des ersten Bedienbereiches (11)
- eine erste Anzahl (L) von Berührpunkten (L1,...,L5) und innerhalb des zweiten Bedienbereiches (12)
- eine zweite Anzahl (R) von Berührpunkten (R1,...,R5) dargestellt werden,
dabei werden die Positionsdaten des ersten Bedienbereichs (11) und des zweiten Bedienbereichs (12) derart gewählt, das es nicht möglich ist mit den Fingern einer menschlichen Hand gleichzeitig alle Berührpunkte (L1,...,L5) aus dem ersten Bedienbereich (12) und alle Berührpunkte (R1,...,R5) aus dem zweiten Bedienbereich (12) zu berühren, wobei die Freigabe für die sicherheitskritische Anwendung nur erteilt wird, wenn sämtliche Berührpunkte (L1,...,L5) aus dem ersten Bedienbereich (11) und sämtliche Berührpunkte (R1,...,R5) aus dem zweiten Bedienbereich (12) berührt werden, und für jede erneute Freigabe eine andere Darstellung auf dem Display für den ersten Bedienbereich (11) und den zweiten Bedienbereich (12) gewählt wird.

2. Verfahren nach Anspruch 1, wobei für die Ermittlung der ersten Anzahl (L) und der zweiten Anzahl (R) ein Zufallsgenerator (2) verwendet wird und dadurch für eine erneute Darstellung von Berührpunkten (R1,...,L5;R1,...,R5) die Anzahl der Punkte nicht vorhersagbar ist.

3. Verfahren nach Anspruch 1 oder 2, wobei für die Ermittlung der Positionsdaten des ersten Bedienbereichs (11) und des zweiten Bedienbereichs (12) ein Zufallsgenerator (2) verwendet wird und dadurch für eine erneute Darstellung der Bedienbereiche (11,12) ihre Positionen nicht vorhersagbar sind.

4. Verfahren nach einem der Ansprüche 1 bis 3, wobei für die Ermittlung eines ersten Satz von Koordinaten (X,Y) der Berührpunkte (L1,...,L5) innerhalb des ersten Bedienbereichs (11) und für die Ermittlung eines zweiten Satz von Koordinaten der Berührpunkte (R1,...,R5) innerhalb des zweiten Bedienbereichs (12) ein Zufallsgenerator (2) verwendet wird.

5. Verfahren nach einem der Ansprüche 1 bis 4, wobei weiterhin geprüft wird, ob zusätzlich ein weiterer Punkt auf dem Sensor berührt wird und wenn dies der Fall ist die Freigabe unterdrückt wird.

## Claims

1. Method for operating an operator control and monitoring device (1) for safety-critical applications, wherein the operator control and monitoring device (1) comprises a display and a touch-sensitive sensor arranged in front thereof, wherein in preparation for a safety-critical application to be approved a control element is shown on the display which an operator must touch in order to obtain an approval, wherein the approval is granted for as long as the control element is being touched. **characterised in that** the touch-sensitive sensor arranged in front thereof is designed to identify multiple touches, wherein the control element is divided into
- a first control zone (11) and
- a second control zone (12),
wherein
- a first number (L) of touch points (L1,...,L5) is displayed in the first control zone (11) and
- a second number (R) of touch points (R1,...,R5) is displayed in the second control zone (12),
the position data of the first control zone (11) and of the second control zone (12) being selected such that it is not possible with the fingers of a human hand to touch all touch points (L1,...,L5) from the first control zone (12) and all touch points (R1,...,R5) from the second control zone (12) at the same time, wherein the approval for the safety-critical application is only granted if all touch points (L1,...,L5) from the first control zone (11) and all touch points (R1,...,R5) from the second control zone (12) are touched, and for each renewed approval a different display is selected on the display for the first control zone (11) and the second control zone (12).

2. Method according to claim 1, wherein a random generator (2) is used to determine the first number (L) and the second number (R) and as a result the number of points cannot be predicted for a renewed display of touch points (L1,...,L5; R1,...,R5).

3. Method according to claim 1 or 2, wherein a random generator (2) is used to determine the position data of the first control zone (11) and of the second control zone (12) and as a result their positions cannot be predicted for a renewed display of the control zones (11,12).

4. Method according to one of claims 1 to 3, wherein a random generator (2) is used to determine a first set of coordinates (X, Y) of the touch points (L1,...,L5) in the first control zone (11) and to determine a second set of coordinates of the touch points (R1,...,R5) in the second control zone (12).

5. Method according to one of claims 1 to 4, wherein a further check is made as to whether additionally another point is being touched on the sensor and if this is the case the approval is suppressed.

## Revendications

1. Procédé pour faire fonctionner un appareil (1) de commande et d'observation pour des applications critiques du point de vue de la sécurité, dans lequel l'appareil (1) de commande et d'observation comprend un écran et, disposé devant lui, un capteur sensible au touché, dans lequel, en préparation d'une application critique du point de vue de la sécurité à libérer, on représente, sur l'écran, un élément de commande qu'un opérateur doit toucher pour obtenir une libération, la libération étant accordée tant que l'élément de commande est touché,
**caractérisé en ce que** le capteur, disposé devant et sensible au touché, est conçu pour détecter des touchers plusieurs fois, l'élément de commande étant subdivisé en
- une première région (11) de commande et en
- une deuxième région (12) de commande,
dans lequel, dans la première région (11) de commande sont représentés
- un premier nombre (L) de points (L1, ..., L5) de toucher et dans la deuxième région (12) de commande
- un deuxième nombre (R) de points (R1, ..., R5) de toucher,
les données de position de la première région (11) de commande et de la deuxième région (12) de commande sont choisies de manière à ce qu'il ne soit pas possible, des doigts d'une main humaine, de toucher en même temps tous les points (L1, ..., L5) de toucher de la première région (12) de commande et tous les points (R1,..., R5) de toucher de la deuxième région (12) de commande, la libération, pour l'application critique du point de vue de la sécurité, n'étant accordée que si l'ensemble des points (L1, ..., L5) de toucher de la première région (11) de commande et l'ensemble des points (R1, ..., R5) de toucher de la deuxième région (12) de commande sont touchés et, pour chaque libération renouvelée, on choisit sur l'écran une représentation autre de la première région (11) de commande et de la deuxième région (12) de commande.

2. Procédé suivant la revendication 1, dans lequel, pour déterminer le premier nombre (L) et le deuxième nombre (R), on utilise un générateur (2) de nombres aléatoires et, ainsi, pour une représentation renouvelée de points (L1, ..., L5; R1, ..., R5) de toucher, le nombre de points n'est pas prévisible.

3. Procédé suivant la revendication 1 ou 2, dans lequel, pour déterminer des données de position de la première région (11) de commande et de la deuxième région (12) de commande, on utilise un générateur (2) de nombres aléatoires et, ainsi, pour une représentation renouvelée des régions (11, 12) de commande, leur position n'est pas prévisible.

4. Procédé suivant l'une de revendications 1 à 3, dans lequel, pour déterminer un premier jeu de coordonnées (X, Y) des points (L1, ..., L5) de toucher dans la première région (11) de commande et pour déterminer un deuxième jeu de coordonnées de points (R1, ..., R5) de toucher dans la deuxième région (12) de commande, on utilise un générateur (2) de nombres aléatoires.

5. Procédé suivant l'une des revendications 1 à 4, dans lequel on contrôle, en outre, si, supplémentairement, on touche un autre point sur le capteur et, si cela est le cas, on supprime la libération.
